# EUROPÄISCHE PATENTANMELDUNG

(11) **EP 1 125 964 A2**
(43) Veröffentlichungstag der Anmeldung: **22.08.2001**
(21) Anmeldenummer: 01103451.9
(22) Anmeldetag: 14.02.2001
(51) Int. Cl.: C08J 3/28, C08J 5/12, B29D 30/56, C08L 21/00

(54) **Runderneuerungsvorrichtung und -Verfahren**

(30) Priorität: 17.02.2000 DE 10007143
(71) Anmelder: A-Z Formen und Maschinenbau GmbH, D-80992 München (DE)
(72) Erfinder: Fischer, Florian, 85560 Ebersberg (DE)
(74) Vertreter: Baronetzky, Klaus, Dipl.-Ing.

(57) **Zusammenfassung**

Die Erfindung liefert ein Verfahren zum Verbinden vulkanisierter Kautschukmischungen, wobei ein Bindegummi bzw. eine Bindegummischicht verwendet wird, und zumindest eine der zu verbindenden Oberflächen der vulkanisierten Kautschukmischung(en) mit einem Plasma behandelt wird. Beschrieben wird weiterhin ein Verfahren zum Runderneuern von Reifen sowie Runderneuerungsvorrichtung für Reifen wobei zumindest ein Teil der Oberfläche(n) der Karkasse und/oder des Laufstreifens vor der Aufbringung des Bindegummis mit einem Plasma behandelt wird.

## Beschreibung

Die Erfindung betrifft ein verfahren zur Verbindung von vulkanisierten Kautschukoberflächen sowie insbesondere ein Verfahren zur Runderneuerung von Reifen und eine Runderneuerungsvorrichtung.

Das Runderneuern von Reifen wird derzeit auf zwei verschiedene weisen durchgeführt:
A. Form-Vulkanisieren, wobei die Karkasse mit einem Laufstreifen aus unvulkanisierem Gummi mit einer der Karkasse zugewandten Bindegummischicht vorbereitet und dann vulkanisiert wird. Hierbei wird das Reifenprofil in den Laufstreifen eingedrückt und die Verbindung mit der Karkasse durch das Andrücken und die wärme in einer Form sichergestellt, wobei die Form lediglich einen Reifen zur gleichen Zeit aufnimmt. Die Arbeitstemperatur liegt bei etwa 150 °C. Dieses Verfahren ist kapitalintensiv.
B. Runderneuern mittels Vorvulkanisieren, wobei ein bereits in einer flachen oder Ringform vulkanisierter und mit einem Profil versehender Laufstreifen mit einer Größe, die bereits zu der Karkasse paßt, mittels einer dünnen Schicht von zuvor unvulkanisiertem Bindegummi angeschweißt wird. Dies wird bei einer wesentlich geringeren Temperatur (zwischen 95 °C und 120 °C) und einem geringeren Druck in einem Autoklav durchgeführt, in welchem üblicherweise eine Mehrzahl von Reifen zur gleichen Zeit behandelt werden können. Dieses Verfahren ist erheblich weniger kapitalintensiv.

Beide Verfahren erfordern die Vorbereitung der Karkasse, die Entfernung des abgefahrenen Laufstreifens und ein Abschälen/ Abrauhen zur Erzeugung eine gleichmäßigen Oberfläche, die in einer Ebene parallel zur Achse des Reifens gekrümmt ist (der sogenannte "Rauhradius" und die "Rauhkontur"). Hierbei entsteht ein vorbestimmter Grad der Rauhigkeit, um das Anschweissen des neuen Laufstreifens zu ermöglichen.

Besonders bei der Runderneuerung von Lastwagenreifen, die je erheblich größere Werte als Personenwagenreifen darstellen, erfolgt ein getrenntes Ausbessern einzelner örtlicher Schäden, die sich in der Karkassenoberfläche zeigen. Dies wird durch ein Ausschleifen durchgeführt, um eine aufgerauhte und unzerklüftete Oberfläche bereitzustellen. Danach werden die Löcher mit erwärmten Reparaturmaterial, das ebenfalls meist Bindegummi ist, ausgefüllt. Dies wird häufig mit kleinen Extrudern in der Größe von Handwerkzeugen durchgeführt, ist jedoch arbeitsintensiv und erfordert viel Sorgfalt und Aufmerksamkeit.

Besonders bei dem Runderneuern mit Vorvulkanisieren wurde das Bindemittel - historisch bedingt - durch Kalandern als breite Platte erzeugt, wobei die Arbeitstemperaturen nicht mehr als 80 °C betrugen. Das Bindegummi wurde gekühlt und mit Kunststoff-Zwischenschichten aufgerollt, wobei es später in die an unterschiedliche Reifengrößen angepaßten Breiten geschnitten wurde, und als ein Teil des arbeitsintensiven Verfahrens des "Aufbauens" eines vorvulkanisierten Reifens aufgebracht. Genauso kann der Bindegummi bzw. die Bindegummischicht direkt aufextrudiert werden.

Eine vorteilhafte Rundeneuerungsvorrichtung ist beispielsweise in der EP-0 637 506 B1, die hier durch Bezugnahme in die Offenbarung aufgenommen wird, offenbart.

Aus der EP 0 870 595 A2 ist weiterhin bekannt, die Konfektionsklebrigkeit von Kautschukmischungen für die Herstellung von Fahrzeugreifen zur erhöhen, indem die Oberfläche einer unvulkanisierten Kautschukmischung plasma- und/oder flammenbehandelt wird. Eine Plasmabehandlung der Oberfläche mindestens einer vulkanisierten Kautschukmischung wird nicht vorgeschlagen.

Aus der DE 690 27 303 T2 ist ein Verfahren zur Oberflächenbehandlung von Polymeren bekannt, bei denen verstärkende Polymere für eine direkte Bindung an Kautschuk in einer Plasmakammer behandelt werden, die ein polymerisierendes Gas oder eine polymerisierende Gasmischung enthält.

Auch die EP 0 591 843 B1 offenbart ein Verfahren zur Herstellung eines eine polymere Verstärkung enthaltenden Kautschukgegenstandes, wobei die polymere Verstärkung plasma-behandelt wird und anschließend in eine unvulkanisierte Kautschukzusammensetzung eingebracht wird.

Kritisch ist in jedem Fall die Erzeugung einer geeigneten Oberfläche der Karkasse zum Aufbringen des Bindegummis bzw. zur Belegung (Verbindung) mit der Lauffläche. Nach solchen Verfahren besteht ein kontinuierlicher Bedarf.

Daher liegt der Erfindung die Aufgabe zugrunde, ein Verfahren gemäß dem Oberbegriff von Anspruch 1 zu schaffen, das eine optimale verbindung vulkanisierter Kautschukoberflächen, insbesondere bei der Runderneuerung von Reifen, ermöglicht, sowie eine entsprechende Vorrichtung zur Durchführung des Verfahrens bereitzustellen.

Diese Aufgabe wird erfindungsgemäß durch die Ansprüche 1 bzw. 13 gelöst. vorteilhafte Weiterbildungen ergeben sich aus den Unteransprüchen.

Plasma gilt neben Festkörpern, Flüssigkeiten und Gasen als sogenannter "vierter Aggregatszustand". Es handelt sich um eine Art Gagwolke mit elektrisch geladenen Teilchen (Ionen), die sehr reaktionsfreudig sind. Im Stand der Technik macht man sich diese Eigenschaft zu Nutze, um glatte Oberfläche bereitzustellen, beispielsweise in der. Luft- und Raumfahrtindustrie zur Erzeugung geeigneter glatter. Oberflächen für eine Verklebung, Dabei werden die Teile vor dem Verkleben mit Hilfe von Plasma optimal gereinigt.

Es wurde überraschenderweise festgestellt, daß die Verbindung bzw. Haftung zwiechen zwei vulkanisierten Kautschukoberflächen erheblich gesteigert werden kann, indem zumindest eine der vulkanisierten Kautschukoberflächen vor der Aufbringung des Bindegummis bzw. der Bindegummimischung, die in der Regel eine nicht-vulkanisierte Kautschukmischung darstellt, mit einem Plasma behandelt wird.

Nach einer bevorzugten Ausführungsform werden beide vulkanisierten Kautschukoberflächen plasmabehandelt. In einigen Fällen kann es vorteilhaft sein, wenn auch die Bindegummimischung plasmabehandelt wird. Falls der. Bindegummi direkt aufextrudiert wird, kann die Plasmabehandlung des Bindegummis vorteilhafterweise nach der Aufbringung des Extrudats erfolgen. Falls jedoch der Bindegummi in Form einer kalandrierten Schicht aufgebracht wird, kann die Plasmabehandlung des Bindegummis auch vor der Aufbringung auf die vulkanisierte Kautschukoberfläche erfolgen.

Besonders vorteilhafte Ergebnisse liefert die Erfindung bei einem Verfahren zur Runderneuerung von Reifen gemäß einem der Ansprüche 8 bis 12.

So wurde überaschend gefunden, dass sowohl die Benetzbarkeit der Karkasse und des Laufstreifen gegenüber dem Bindegummi, als auch die Haftung bzw. Verbindung (Vernetzung) nach dem Vulkanisieren des Bindegummis bzw, der Bindegummischicht durch die erfindungsgemäße Plasmabehandlung erheblich verbessert werden kann.

Obwohl die genaue Ursache für die erheblichen positiven Auswirkungen nicht genau bekannt ist, wird angenommen, dass durch die Plasmabehandlung die chemische Reaktivität bzw. Vernetzbarkeit der Oberfläche des vulkanisierten Kautschuks erhöht wird. Zugleich scheint eine besonders problemlose und blasenfreie Aufbringung des Bindegummis möglich. Besonders gravierend ist die Wirkung der Plasmabehandlung auf die Oberfläche der aufgerauhten Karkasse, die bei herkömmlichen verfahren häufig nicht zuletzt durch die verfahrenabedingte Lagerung und Alterung der Karkassenoberfläche Probleme bereitet. Der positive Einfluss der Plasmabehandlung ist auch insoweit überraschend, als durch die Plasmabehandlung eigentlich eine weitere Aufoxidation der Oberfläche zu erwarten war, die einer Vernetzung beim Vulkanisieren abträglich wäre. Zudem ist der Effekt nicht wie bei unvulkanisierten Kautschukmischungen auf eine Erhöhung der Konfektionsklebrigkeit zurückzuführen.

Nach einem weiteren erfindungsgemäßen Aspekt wird eine vorrichtung zum Runderneuern von Reifen gemäß einem der Ansprüche 13 bis 17 bereitgestellt.

Zur Erzeugung des bei der vorliegenden Erfindung eingesetzten Plasmas kann jedes dem Fachmann auf diesem Gebiet bekannte Verfahren eingesetzt werden.

Unter Plasmabehandlung soll hier die Einwirkung durch Gasentladung entstandener Teilchen, (z.B. radikale Ionen, Elektronen, Moleküle) auf eine Kautschukoberfläche verstanden werden. Bei der Plasmabehandlung wird im allgemeinen zwischen Niederdruckplasma und Normaldruckplasma unterschieden. Bei einem Niederdruckplasmaverfahren wird in einer Prozesskammer bei einem verringerten Druck (z.B. 0,5 bis 2 mbar) ein Gas oder ein Gasgemisch eingeleitet. Durch Anlegen einer hochfrequenten Wechselspannung wird eine Gasentladung (Plasma) gezündet, wobei das Gas in den ionisierten Zustand überführt wird. Als Gas können vorzugsweise Luft, Edelgase, Sauerstoff oder Stickstoff, insbesondere Luft, verwendet werden. Die entstandenen Fragmente des Gases oder des Gasgemisches treffen bei dem erfindungsgemäßen Verfahren auf die Oberfläche der vulkanisierten Kautschukmischungen und bewirken deren Modifizierung. Vorteilhaft am Niederdruckplasmaverfahren ist die hohe Effizienz, da die Lebensdauer der aktiven Teilchen bei vermindertem Druck hoch ist. Aufgrund des abeschlossenen Prozessraumes können definierte Gase oder Gasgemische zur Anwendung kommen. Des weiteren wird eine inhomogene oder unzureichende Aktivierung vermieden.

Aufgrund der leichteren Handhabbarkeit in einer Werkstatt und des geringeren apparativen Aufwands wird allgemein die Verwendung von Normaldruckplasmen bevorzugt, Im Unterschied zum Niederdruckplasmaverfahren findet die Gasentladung nicht in einem abgeschlossenen Raum statt, so daß dieses unter atmosphärischen Bedingungen wie Normaldruck und Luft arbeitet. Als bevorzugtes Verfahren findet die Korona-Entladung Anwendung. Prinzipiell kann auch ein Hochtemperaturplasma verwendet werden.

Bezüglich der Plasmabehandlung und der Flammenbehandlung wird auf folgende Literatur verwiesen; Jörg Friederich: Plasmabehandlung von Polymeren, Kleben & Dichten - Adhasion, Jahrgang 41,1-2 /97, S. 28-33; Gerhard Liebel: Plasmabehandlung von Polyolefinen, GAK 8/1990, S. 421ff.; Fritz Bloss: Zur Koronabehandlung von Formteilen, Sonderdruck aus Oberfläche+Jot 12/88 (Vorbehandeln); Thomas H1. Herrling. J., Rakowski W., Höcker, H.: Umweltfreundliche Veredelungsverfahren für Wolle durch Vorbehandlung mit elektrischen Gasentladungen (Plasmen), ITP 1/93, S. 42-49.

Erfindungsgemäß können Kautschukmischungen aus verschiedenen Materialien eingesetzt werden. So können Mischungen, die als Kautschukkomponente z.B. Naturkautschuk (NR), Butadienkautschuk (BR), styren-Butadien-Copolymer (SBR), Butylkautschuk, synthetisches Polyisopren, Ethylen-Propylen-Dien-Copolymer sowie weitere schwefelvernetzbare Kautschuke und Mischungen hieraus enthalten, verwendet werden. Die genannten Kautschukmaterialien finden mit üblichen Zusatzstoffen versehen insbesondere bei der Herstellung von Vollgummireifen und Luftreifen für PKWs und LKWs Verwendung.

Besonders bevorzugt ist, wenn als Plasmabehandlungsverfahren die Korona-Entladung angewandt wird. Dieses Verfahren ist kostengünstig und mit apparativen geringem Aufwand zu bewerkstelligen. Für die Korona-Entladung sind verschiedene Verfahrensweisen bekannt, wie z.B. die Hochfrequenzfunkenentladung und die Niederfrequenszfunkenentladung. Bei einer Hochfrequenzentladung besteht die Möglichkeit eine Einzelelektrode, an die Hochspannung anliegt (< 15 kV) Korona absprühen zu lassen. Die unmittelbar in der Nähe befindliche Katuschukoberfläche dient als Auftrittsfläche dieser Gasentladung. Der Vorteil der Hochfrequenzfunkanentladung besteht darin, daß die Koronabehandlung der Oberfläche energisch reguliert und optimiert werden kann.

Im Gegensatz zur Hochfrequenzfunkenentladung (Bereiche um 25 KHz) arbeitet die Niederfrequenzfunkenentladung bei 50 bis 60Hz. Durch eine quer zur Entladungsrichtung verlaufende Luftströmung wird das entladene Gas aus dem Blektrodenbereich herausgedrückt und kann auf die zu behandelnde Oberfläche (Kautschukoberfläche) einwirken. Die niederfrequente Entladung wird für das erfindungsgemäße Verfahren bevorzugt, da eine einfache Umsetzung aufgrund des geringeren apparativen Aufwandes erfolgen kann.

Als Gasmedium wird vorzugsweise Luft verwendet. Aufgrund der einfachen Handhabung der damit verbundenen Vorrichtung kann unkompliziert die Oberfläche behandelt werden. Prinzipiell sind aber auch andere Gase denkbar, die in der Lage sind, die Oberfläche geeignet zu modifizieren, wie Sauerstoff und Stickstoff. Um den Vulkanisationeprozeß an der Grenzfläche zum Bindegummi positiv zu beeinflußen, ist es denkbar, die Oberfläche mit schwefelenthaltenden Substanzen zu versehen.

Erfindungsgemäß besonders günstig ist es, daß im wesentlichen halogenfreie Luft verwendet wird. Hierdurch läßt sich die erfindungsgemäße Lösung auch in Umgebungen einsetzen, die keine verunreinigung der Umgebungsluft erlauben, und es ist erfindungsgemäß möglich, eine technisch aufwendige vollständige Abdichtung der gesamten Vorrichtung zu vermeiden.

In diesem Zusammenhang ist es besonders günstig, daß in bevorzugter Ausgestaltung der Erfindung Normaldruckplasma verwendet wird. Das beim Stand der Technik vorgesehene Isolationsgefäß kann dementsprechend vollständig entfallen. Es versteht sich, daß eine leichte Abweichung vom Atmosphären Druck, wie sie beispielsweise durch Düsen oder dergleichen bereitgestellt wird, hier ebenfalls unter Normaldruckplasma zu subsumieren ist.

Geeignete Vorrichtungen zur Plasmabehandlung von Oberflächen sind beispielsweise aus der DE 298 05 999 der Firma Agodyn Hochspannungstechnik GmbH sowie aus der DE 195 32 412 der gleichen Anmelderin bekannt. So ist es nach neueren Verfahren zur Plasma(vor)reinigung von Oberflächen möglich, die Oberflächenbehandlung bei Normaldruck durchzuführen, z.B. mit dem Plasmatreat-System der Firma Agrodyn Hochspannungstechnik GmbH, Steinhagen.

Die vorstehenden Druckschriften betreffend Verfahren und Vorrichtungen zur Plasmaerzeugung bzw. -behandlung werden hier ausdrücklich durch Bezugnahme in die Offenbarung aufgenommen.

Nach einer bevorzugten Ausführungsform der Erfindung ist die zur Plasmaerzeugung eingesetzte Vorrichtung so dimensioniert, daß die zu behandelnde vulkanisierte Kautschukoberfläche flächig plasmabehandelt werden kann.

In einigen Fällen kann es jedoch auch vorteilhaft sein, nur Teilbereiche bzw. Abschnitte der Oberfläche mit Plasma zu behandeln. Dazu können ein oder mehrere Vorrichtungen zur Plasma-Oberflächenbehandlung parallel oder sequenziell eingesetzt werden. Beispielsweise kann die Oberfläche der Karkasse in einem spiralförmigen Band oder in mehreren parallelen Bändern um den Umfang der Karkasse plasmabehandelt werden.

Weitere Einzelheiten, Vorteile und Merkmale der erfindungsgemäßen Vorrichtung und des erfindungsgemäßen Verfahrens ergeben sich aus der nachfolgenden Beschreibung der Ausführungsbeispiele anhand der Zeichnungen.

Es zeigen:

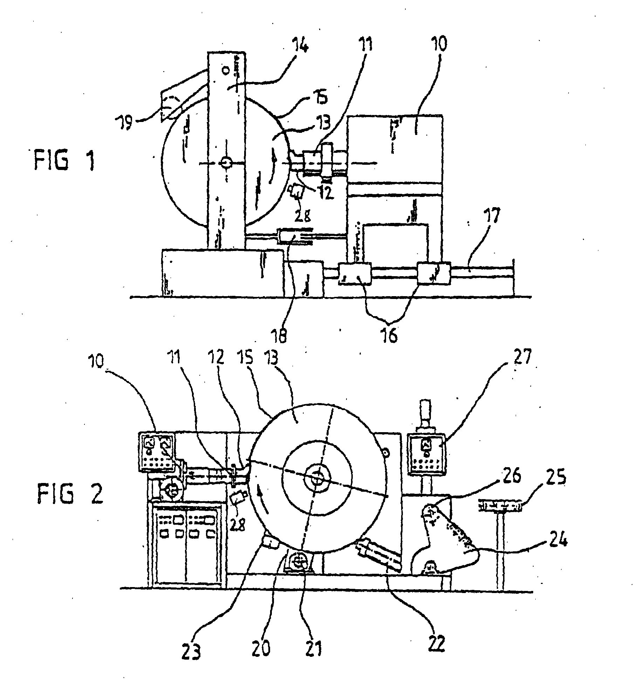

- Fig. 1: einen erfindungsgemäßen Bindegummiextruder der CTC-(Cushion-To-Casing)-Art auf der Basis der EP 0 637 506, auf die vollinhaltlich Bezug genommen wird, bei welchem die Karkassenoberfläche plasmabehandelt wird bevor das Bindegummi auf die Karkasse aufgebracht wird; und
- Fig. 2: eine erfindungsgemäße Ausführungsform eines Bindegummiextruders, in Form einer integrierten Einheit gemäß der EP 0 637 506, auf die vollinhaltlich Bezug genommen wird, die ebenfalls Laufstreifen aufbringt, wobei wiederum die CTC-Art des Extruders vorliegt und ein sogenannter Swing-Builder gemäß der nicht vorveröffentlichten DE-OS 42 03 027, auf die vollinhaltlich Bezug genommen wird, verwendet wird, und eine Plasmabehandlung der Karkassenoberfläche erfolgt.

Bei der Ausgestaltung gemäß Fig. 1 ist ein Bindegummiextruder 10 mit einem Extrusionskopf 11 und einem Extrusionsmundstück 12 versehen. Eine Karkasse 13 ist in einer Reifenaufbauanlage 14 mit bekannter Konstruktion gelagert, wobei ein Mittenantrieb für das Drehen der Karkasse 13 vorgesehen ist. Der Extruder 10 ist gleitbeweglich in Richtungen auf die Karkasse zu und von der Karkasse weg geführt, mittels vier Kugellagerboxen 16, von denen zwei dargestellt sind und die ein leichtes Gleiten des Extruders 10 auf Schienen 17 erlauben. Ein Arbeitszylinder 18 bewegt den Extruder relativ zu der Reifenaufbauanlage 14, bevorzugt pneumatisch, was zusätzlich eine leicht einstellbare Annäherungskraft für den Auftragsschuh des Düsenmundstücks 12 für das Verformen der Karkasse 13 ermöglicht, wie es weiter unten erläutert ist.

Die Reifenaufbauanlage 14 weist darüberhinaus eine Anrollvorrichtung 19 für den vorvulkanisierten Laufstreifen auf, nachdem dieser auf die mit Bindegummi versehene Oberflächen 15 der Karkasse 13 in bekannter Weise aufgebracht ist.

Die Plasmabehandlungsvorrichtung 28 ist so angeordnet, daß die Plasmabehandlung der Karkassenoberfläche unmittelbar vor der Aufbringung des Bindegummis erfolgt. Sie weist einen Elektrodenkopf mit zwei Elektroden (nicht dargestellt) auf, und wird in einem Abstand von etwa 4 bis 15 mm an die zu behandelnde Karkassenoberfläche, die z.B. aus herkömmlichen Kieselsäure enthaltenden Kautschukmischung besteht, herangeführt, so daß die während der Zündung der Elektroden entladenen Gasteilchen (Luftteilchen) auf die Oberfläche einwirken können. Eine entsprechende Luftströmung bewirkt, daß die entladenen Teilchen aus dem Zwischenraum der Elektroden herausgetragen werden und auf die Katuschukoberfläche auftreffen. Die Behandlungszeit beträgt ca. 0.17 bis 0.3 Sec. Für die angegebene Anlage (Arcojet PG 051) lag die Summe der Behandlungszeiten beider Kautschukoberflächen ca. > 0,8 Sec.

Fig. 2 zeigt eine integrierte Einheit eines Bindegummiextruders 10 und einer Reifenaufbauanlage, wobei gleiche Bezugszeichen auf gleiche Teile wie in Fig. 1 hinweisen. Anstelle der Vorrichtung für die Erzeugung einer horizontalen Bewegung des Extruders 10 gegen die Karkasse 13 zeigt hier die Reifenaufbauanlage einen Schwenkarm 20, der um einen Schwenkpunkt 21 durch einen linearen Schraubenantrieb 22 verschwenkbar ist, der durch einen Elektromotor 23 betätigt wird.

Diese Anordnung erlaubt es, daß sich die Reifenkarkasse 13 in der dargestellten Position in einem Kreisbogen bewegen kann, der an die Horizontale angenähert ist, und im wesentlichen radial gegen die erfindungsgemäße Extrusionsdüse 12 gedrückt wird, wobei eine Annäherungskraft durch den Antriebsmotor 23 des Linearantriebs 22, der auf den Schwenkarm 20 wirkt, überwacht wird.

Bei Bewegungen weg von den Extruder 10 kann der Schwenkarm 20 dazu dienen, eine leichte Montage der Karkasse 13 vom Fußboden aus zu erlauben, wie auch, die Karkasse 13 in die Einheit für das Aufbringen des Laufstreifens und das Anrollen 24 zu drükken, die zu der Karkasse hin für das Führen des vorvulkanisierten Laufstreifens von dem Rolltisch 25 und für das Anbringen mindestens der Anrollkraft gegen die Karkasse mittels der Rolle 26 geschwenkt werden kann.

Diese Ausführungsform erzeugt eine besonders wirksame und schnelle Integration aller Arbeitsschritte für das Reifenaufbauen bei einem vorvulkanisierten Verfahren, wobei Einzelheiten aus der - nicht vorveröffentlichten - DE-A1-42 03 027, auf die vollinhaltlich Bezug genommen wird, ersichtlich sind.

Die Plasmabehandlungsvorrichtung 28 ist auf ähnliche Weise integriert wie bei der Vorrichtung gemäß Fig. 1. Es kann auch eine zusätzliche Plasmabehandlungsvorrichtung (nicht dargestellt) zur Behandlung der dem Bindegummi zugewandten Seite des Laufstreifens vorgesehen sein, insbesondere nach dem Drehtisch 25 oder auf der Höhe der Einheit für das Aufbringen des Laufstreifens und das Anrollen 24.

Bei den beiden dargestellten Einheiten können die verschiedenen Bewegungen der Teile relativ zueinander wie auch die Extrusionsgeschwindigkeit durch eine Prozeß-Steuereinheit koordiniert werden, wobei verschiedene Aktionen gestartet und erforderlichenfalls durch einen Bediener über eine Steuerpanel 27 festgelegt werden können, das in Fig. 2 dargestellt ist, jedoch gleichermaßen auch in Fig. 1 anwendbar ist.

## Patentansprüche

1. Verfahren zum Verbinden vulkanisierter Kautschukmischungen, wobei ein Bindegummi bzw. eine Bindegummischicht verwendet wird, dadurch gekennzeichnet, daß zumindest ein Teil mindestens einer der zu verbindenden Oberflächen der vulkanisierten Kautschukmischung(en) in Gegenwart von im wesentlichen halogenfreier Luft mit einem Plasma behandelt wird.

2. Verfahren nach Anspruch 1, dadurch gekennzeichnet, daß das verwendete Plasma ein Normaldruckplasma ist, das insbesondere im wesentlichen unter Atmosphärendruck steht.

3. Verfahren nach Anspruch 1, dadurch gekennzeichnet, daß das Verfahren ohne die Vorrichtung umgebendes Isolationsgefäß durchgeführt wird.

4. Verfahren nach Anspruch 3, dadurch gekennzeichnet, daß die zu verbindenden Oberflächen beider vulkanisierten Kautschukmischungen mit einem Plasma behandelt werden.

5. Verfahren nach einem der vorhergehenden Ansprüchen, dadurch gekennzeichnet, daß zusätzlich der Bindegummi bzw. die Bindegummischicht mit einem Plasma behandelt wird.

6. Verfahren nach einem der vorstehenden Ansprüche, dadurch gekennzeichnet, daß die Plasmabehandlung unmittelbar vor der Aufbringung des Bindegummis bzw. der Bindegummischicht auf die Oberfläche(n) des (der) vulkanisierten Kautschukmischung(en) erfolgt.

7. Verfahren nach einem der vorstehenden Ansprüche, dadurch gekennzeichnet, daß nur ein Teil mindestens einer der zu verbindenden Oberfläche(n) mit einem Plasma behandelt wird.

8. Verfahren gemäß einem der vorhergehenden Ansprüchen, dadurch gekennzeichnet, dass es zur Runderneuerung eines Reifens verwendet wird, wobei eine Karkasse nach Aufbringung mindestens eines Bindegummis bzw. einer Bindegummischicht mit einem Laufstreifen belegt wird.

9. Verfahren nach Anspruch 8, dadurch gekennzeichnet, daß zumindest die Karkasse vor der Aufbringung des Bindegummis mit einem Plasma behandelt wird.

10. Verfahren nach einem der Ansprüche 8 oder 9, dadurch gekennzeichnet, daß zumindest der Laufstreifen vor der Belegung mit einem Plasma behandelt wird.

11. Verfahren nach einem der Ansprüche 8 bis 10, dadurch gekennzeichnet, daß auch der Bindegummi bzw. die Bindegummischicht vor der Aufbringung auf die Karkassenoberfläche bzw. der Belegung mit dem Laufstreifen auf einer oder beiden Seiten mit einem Plasma behandelt wird.

12. Verfahren nach einem der Ansprüche 8 bis 11, dadurch gekennzeichnet, daß der Bindegummi als kalandrierte Lage autgelegt wird.

13. Runderneuerungsvorrichtung für Reifen, bei welcher ein Laufstreifen auf eine Karkasse belegbar ist, mit einer Laufstreifen-Zuführvorrichtung für die Zuführung des Laufstreifens zu der Karkasse und mit einer Zuführvorrichtung für einen Bindegummi bzw. eine Bindegummischicht, dadurch gekennzeichnet, dass zumindest ein Teil der Oberfläche(n) der Karkasse und/oder des Laufstreifens vor der Aufbringung des Bindegummis mit einem Plasma behandelt wird.

14. Verfahren nach Anspruch 13, dadurch gekennzeichnet, daß zumindest die Karkasse vor der Aufbringung des Bindegummis bzw. der Bindegummischicht mit einem Plasma behandelt wird.

15. Runderneuerungsvorrichtung nach Anspruch 13 oder 14, dadurch gekennzeichnet, daß zumindest der Laufstreifen vor der Belegung mit einem Plasma behandelt wird.

16. Runderneuerungsvorrichtung nach einem der Ansprüche 13 bis 15, dadurch gekennzeichnet, daß auch der Bindegummi bzw. die Bindegummischicht vor der Aufbringung auf die Karkassenoberfläche bzw, der Belegung mit dem Laufstreifen auf einer oder beiden Seiten mit einem Plasma behandelt wird.

17. Runderneuerungsvorrichtung nach einem der Ansprüche 13 bis 16, dadurch gekennzeichnet, daß der Bindegummi nicht aufextrudiert, sondern als kalandrierte Lage aufgelegt wird.
